# EUROPEAN PATENT SPECIFICATION

(11) **EP 4 329 144 B1**
(45) Date of publication and mention of the grant of the patent: **05.08.2026**
(21) Application number: 23804886.2
(22) Date of filing: 28.06.2023
(51) Int. Cl.: H02J 9/06, H01H 9/54

(54) **HYBRID FAST TRANSFER SWITCH AND METHOD FOR FAST SWITCHING BETWEEN POWER SUPPLIES BY USING SAME**
HYBRIDER SCHNELLER TRANSFERSCHALTER UND VERFAHREN ZUM SCHNELLEN UMSCHALTEN ZWISCHEN STROMVERSORGUNGEN DAMIT
COMMUTATEUR DE TRANSFERT RAPIDE HYBRIDE ET PROCÉDÉ DE COMMUTATION RAPIDE ENTRE DES ALIMENTATIONS ÉLECTRIQUES À L'AIDE DE CELUI-CI

(30) Priority: 30.06.2022 CN 202210769509
(43) Date of publication of application: 28.02.2024
(73) Proprietor: Schneider Electric Industries SAS, 92500 Rueil-Malmaison (FR)
(72) Inventor: CHEN, Jiamin, Shanghai 201203 (CN); LIU, Zhenzhong, Shanghai 201203 (CN); ZHAO, Haijun, Shanghai 201203 (CN); CHEN, Xiaohang, Shanghai 201203 (CN); SONG, Yangfeng, Shanghai 201203 (CN); YANG, Qing, Shanghai 201203 (CN); DONG, Jihua, Shanghai 201203 (CN); ZHANG, Kunpeng, Shanghai 201203 (CN)
(74) Representative: Manitz Finsterwald Patent- und Rechtsanwaltspartnerschaft mbB
(86) International application number: PCT/CN2023/103116
(87) International publication number: WO 2024/002144

(56) References cited:
- WO-A1-2018/157915
- CN-A- 101 854 075
- CN-A- 101 958 573
- CN-A- 102 074 394
- CN-A- 103 001 614
- CN-A- 111 245 087
- JP-A- H08 126 227
- US-A1- 2021 028 621
- US-B2- 11 283 284
- US-B2- 8 508 890

## Description

### TECHNICAL FIELD

The present invention relates to a hybrid fast transfer switch and a method for fast switching between two power sources using the hybrid fast transfer switch.

### BACKGROUND

In a data center or another application with high requirements on power supplying continuity, it is required that when one power source is out of power, the load will not be powered off or can be switched to another power source in a very short duration. The maximum allowable power-off duration depends on application scenarios, for example, 10ms for a data center, and 5ms for process equipment and financial facilities of some electronic workshops. At present, the switching between two power sources may be implemented using the technology of static transfer switch (STS). The current mainstream STS technology ensures a power-off duration of 5ms for the load. Alternatively, uninterruptible power supplying may be implemented using automatic transfer switch (ATS) + uninterruptible power source (UPS) + battery.

The technology of thyristor is widely used in STS, but the voltage drop on thyristor will lead to a large amount of power loss. For example, under normal operating conditions, there is a voltage drop of about 2V on STS, and for a 230V power supply system, there will be an additional loss increased by about 1%. Moreover, for applications with high current (e.g., 1000A or above), this part of loss will cause relatively great heat on thyristor, which requires additional heat dissipation measures and increases the cost and volume of STS device.

In addition, STS, which is a semiconductor device, has weak capability to withstand the high current due to overload or short-circuit. The existing STS cannot withstand overload for a long time, and if an overload occurs, it will turn off for self-protection. When there is a high current due to short circuit, the internal protection element needs to cut off the fault very fast, otherwise it is likely to lead to heating and damage to thyristor.

Using ATS + UPS + battery to implement uninterruptible power supplying, although power supplying continuity is better, is more expensive (e.g., the UPS needs battery maintenance) while less efficient (e.g., the UPS's inverter mode ~ 97%).

Therefore, it is expected to provide a hybrid fast transfer switch, which can realize fast switching between two power sources under high current, reduce loss under normal operating conditions, and have improved overload and short-circuit withstand capabilities.

WO 2018/157915 A1 discloses a load transfer switch. US 11 283 284 B2 discloses a changeover apparatus. US 8 508 890 B2 discloses an arc extinguishing hybrid transfer switch.

### SUMMARY

According to an aspect of an embodiment of the present invention, there is provided a hybrid fast transfer switch in accordance with claim 1.

According to another aspect of an embodiment of the present invention, there is provided a method in accordance with claim 7.

Therefore, according to the embodiments of the present invention, the hybrid fast transfer switch can implement fast switching between two power sources under high current, reduce loss under normal operating conditions, and have improved overload and short-circuit withstand capabilities.

### BRIEF DESCRIPTION OF DRAWINGS

The present invention will be more easily understood by the following detailed description with the assistance of the drawings, in which like reference numerals designate units with like structures, and in which:
Fig. 1 shows a simplified circuit diagram of an example circuit including a hybrid fast transfer switch according to an embodiment of the present invention;
Fig. 2A is a simplified circuit diagram showing an example of a diversion branch of a hybrid fast transfer switch according to an embodiment of the present invention;
Fig. 2B is a simplified circuit diagram showing another example of a diversion branch of a hybrid fast transfer switch according to an embodiment of the present invention;
Fig. 2C is a simplified circuit diagram showing yet another example of a diversion branch of a hybrid fast transfer switch according to an embodiment of the present invention;
Fig. 3A shows a simplified flowchart of a method for fast switching between power sources using a hybrid fast transfer switch according to an embodiment of the present invention;
Fig. 3B shows a detailed flowchart of a method for fast switching between power sources using a hybrid fast transfer switch according to an embodiment of the present invention; and
Fig. 4 shows a timing diagram of a method for fast switching between power sources using a hybrid fast transfer switch according to an embodiment of the present invention.

### DETAILED DESCRIPTION

In the following, a clear and complete description will be made with respect to the technical solutions in the embodiments of the present invention in conjunction with the drawings.

Furthermore, it should be noted that in this specification, A is connected to B may mean "A is directly connected to B" or "A is connected to B via another middleware". A is connected between B and C may mean "A is directly connected to B and C" or "A is connected to B and C via another middleware".

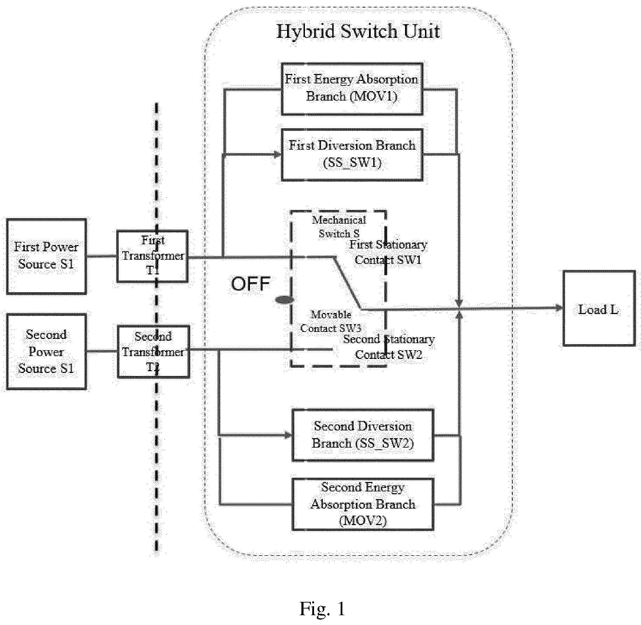

Fig. 1 shows a simplified circuit diagram of an example circuit including a hybrid fast transfer switch according to an embodiment of the present invention.

As shown in Fig. 1, the example circuit includes a first power source S1, a second power source S2, a first transformer T1, a second transformer T2, a hybrid fast transfer switch 101 and a load L.

The first power source S1 and the second power source S2 are used to supply power to the circuit. The first transformer T1 and the second transformer T2 are used to transform the AC voltage and current from the power sources so as to transmit AC power. The hybrid fast transfer switch 101 is used to switch between two power sources.

The hybrid fast transfer switch 101 may include a first energy absorption branch MOV1, a first diversion branch SS_SW1, a second energy absorption branch MOV2, a second diversion branch SS_SW2 and a mechanical switch S.

The first diversion branch SS_SW1 and the second diversion branch SS_SW2 may be used to prevent the mechanical switch from arcing when it is opened and/or fast conduct the backup power source and the load.

The first energy absorption branch MOV1 and the second energy absorption branch MOV2 may be used to ensure that when a solid-state switch of the first diversion branch SS_SW1 or the second diversion branch SS_SW2 is opened, no energy spikes would be caused and the residual energy in the circuit would be absorbed.

The mechanical switch S includes a first stationary contact SW1, a second stationary contact SW2 and a movable contact SW3. In some embodiments, the hybrid fast transfer switch 101 may include a first mechanical switch and a second mechanical switch that are independent of each other, wherein the first mechanical switch is connected between the first power source and the load, and the second mechanical switch is connected between the second power source and the load, and wherein each of the mechanical switches includes a stationary contact and a movable contact, respectively.

Therefore, according to the embodiments of the present invention, the hybrid fast transfer switch 101 can perform fast switching between two power sources under applications with high current, and the fast switching can ensure a power-off duration of less than 10ms for the load, so as to meet application requirements for a data center. This fast switching can further ensure a power-off duration of less than 5ms for the load, so as to meet application requirements for process equipment and financial facility in electronic workshops. In addition, under normal operating conditions, the hybrid fast transfer switch 101 has low loss and improved overload and short-circuit withstand capabilities.

Specifically, when a fault is detected in the first power source S1, the hybrid fast transfer switch 101 performs an operation of switching from the first power source S1 to the second power source S2.

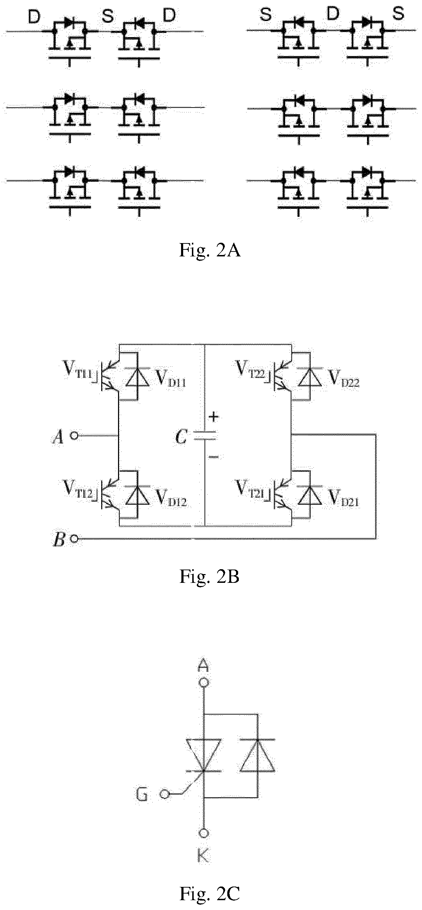

In some embodiments, the first diversion branch SS_SW1 and the second diversion branch SS_SW2 may be implemented by insulated gate bipolar transistors (IGBTs) or metal-oxide semiconductor field effect transistors (MOSFETs) connected in reverse series, a full-bridge submodule, or a semi-controlled device. The implementation of the first branch SS_SW1 and the second branch SS_SW2 will be further described with reference to Figs. 2A to 2C.

Specifically, when a diversion branch is the diversion branch on the side to be opened, it is used to prevent arcing when the mechanical switch is switched out; when a diversion branch is the diversion branch on the side to be closed, it is used to fast conduct the backup power source and the load. For example, when the hybrid fast transfer switch 101 performs the operation of switching from the first power source S1 to the second power source S2, the first diversion branch SS_SW1 is the diversion branch to be opened, and thus turning on the first diversion branch SS_SW1 can prevent arcing when the mechanical switch S is switched out from the first power source S1; and the second diversion branch SS_SW2 is the diversion branch on the side to be closed, and thus turning on the second diversion branch SS_SW2 can fast conduct the second power source S2 and the load L.

In some embodiments, the first energy absorption branch MOV1 and the second energy absorption branch MOV2 may implement the absorption of residual energy by means of a metal oxide voltage limiter (MOV), a transient voltage suppressor (TVS) and the like. In addition, an RC buffer circuit may be used to implement the energy absorption branch as well.

Specifically, when the hybrid fast transfer switch 101 performs the operation of switching from the first power source S1 to the second power source S2, the first diversion branch SS_SW1 is turned on to prevent arcing. When the mechanical switch S is switched out from the first power source S1, the first diversion branch SS_SW1 is turned off, at which time there is still residual power in the circuit, and the first energy absorption branch MOV1 may ensure that when the first diversion branch SS_SW1 is turned off, no voltage spikes would be caused and the residual energy in the circuit will be absorbed.

In some embodiments, the switching-out duration for the mechanical switch S determines the power-off duration for the load L of the entire circuit, so i the mechanical switch S is required to switch out very fast. The fast switching out of the mechanical switch S is implemented by using a Thomson effect execution device. For example, in the example according to the invention of implementing the fast switching-out by using the Thomson effect execution device, when the power-off duration for the load is required to be less than 10ms, the action duration for the Thomson effect execution device should be less than 1ms, and the sum of the action duration, and the disconnected duration for the first stationary contact SW1 and the movable contact SW3 of the mechanical switch S should be less than 9ms. When the power-off duration for the load is required to be less than 5ms, the action duration for the Thomson effect execution device should be less than 500µs, and the sum of the action duration, and the disconnected duration for the first stationary contact SW1 and the movable contact SW3 of the mechanical switch S should be less than 4.5ms. In addition, on the premise that the switching-out duration is ensured, the fast switching out of the mechanical switch S can also take other forms, such as an electromagnet driver.

In some embodiments, there is no particular requirements for the switching-in duration for the mechanical switch S. The switching in of the mechanical switch S can be implemented by using an energy storage spring. For example, the energy storage spring is pre-stored with energy by using a motor, and then the mechanical switch S is pushed to be switched in by discharging energy from the energy storage spring. In addition, the switching in of the mechanical switch S can take other forms, such as an electromagnet driver or a motor driver.

In addition, in some embodiments, it is necessary to detect the switching-out state of the mechanical switch S. For example, when the hybrid fast transfer switch 101 performs the operation of switching from the first power source S1 to the second power source S2, the switching-out state of the mechanical switch S need to be detected before turn on the second diversion branch SS_SW2. Otherwise, both power sources will be short-circuited. The switching-out state of the mechanical switch S may be detected by detecting the change in current flowing through the first stationary contact SW1 of the mechanical switch S. Specifically, when the mechanical switch S is switched out from the first power source S1, the first stationary contact SW1 is opened, so it may be detected that the current on the first stationary contact SW1 is 0. In addition, the switching-out state of the mechanical switch S may also be detected by detecting the change in position of a device such as microswitch, Hall effect sensor, etc. Specifically, when the mechanical switch S is switched out from the first power source S1, the first stationary contact SW1 is opened, and the current on the first stationary contact SW1 is 0, so the magnetic field generated by the current changes. The Hall effect sensor can detect the change in the magnetic field and change its position, so as to detect the switching-out state of the mechanical switch S.

According to the embodiment of the present invention, the hybrid fast transfer switch 101 can further determine whether to perform the operation of switching from the first power source S1 to the second power source S2 according to situation of loop current to ensure safe operation for diversion branches. Specifically, when a fault occurs in the first power source S1, the loop current is detected to obtain the situation of loop current. The situation of loop current can also be obtained by other devices. If it is determined that a short circuit occurs based on the situation of loop current, keep the mechanical switch S switched in with the first power supply S1 and wait for the superior protection device to cut off the short circuit current. If it is determined that an overload occurs based on the situation of loop current, evaluate the overload current, and on the premise that the safe operation for diversion branches is ensured, perform the operation of switching from the first power source S1 to the second power source S2 by the hybrid fast transfer switch. If the safe operation for diversion branches cannot be ensured, the SW1 is maintained to be closed.

Figs. 2A- 2C are simplified circuit diagrams showing an example of a diversion branch of a hybrid fast transfer switch according to an embodiment of the present invention.

Fig. 2A is a simplified circuit diagram showing an example of a diversion branch of a hybrid fast transfer switch according to an embodiment of the present invention. Refer to Fig. 2A, an example of implementing a diversion branch by using MOSFETs connected in reverse series connection per bridge arm is shown, wherein 3 bridge arms are shown, and there are two MOSFETs connected in reverse series per bridge arm. Connected in reverse series may include connecting the sources of the two MOSFETs or connecting the drains of the two MOSFETs. In addition, the MOSFET in Fig. 2A may be replaced by IGBT.

Fig. 2B is a simplified circuit diagram showing another example of a diversion branch of a hybrid fast transfer switch according to an embodiment of the present invention. Referring to Fig. 2B, an example of implementing a diversion branch by using a structure of a full-bridge submodule is shown. The full-bridge sub-module consists of four IGBTs with anti-parallel diodes and energy storage capacitors. The full-bridge sub-module involves four operating states: forward state, reverse state, bypass state and shutting state. According to different current directions, each operating state has two execution modes, among which the first three operating states are all normal operating states, while the last shutting state is generally used for troubleshooting and system rebooting.

Fig. 2C is a simplified circuit diagram showing another example of a diversion branch of a hybrid fast transfer switch according to an embodiment of the present invention. As shown in Fig. 2C, a diversion branch may be implemented by using a semi-controlled device such as a thyristor.

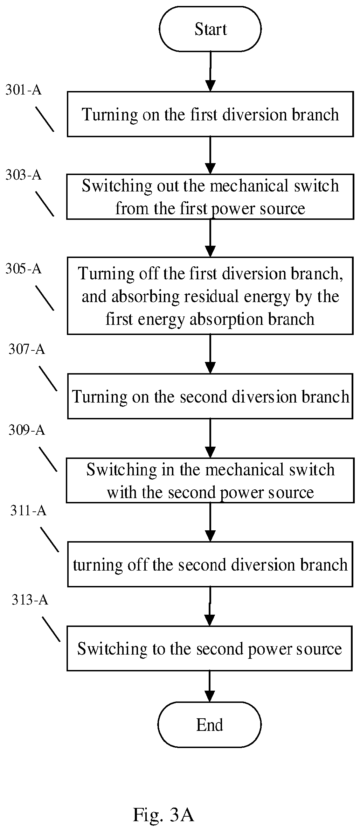

Fig. 3A shows a simplified flowchart of a method for fast switching between power sources using a hybrid fast transfer switch according to an embodiment of the present invention.

In block 301-A, the first diversion branch is turned on.

In block 303-A, the mechanical switch is switched out from the first power source.

In block 305-A, the first diversion branch is turned off, and the residual energy in the circuit is absorbed by the first energy absorption branch.

In block 307-A, the second diversion branch is turned on.

In block 309-A, the mechanical switch is switched in with the second power source.

In block 311-A, the second power source is switched to.

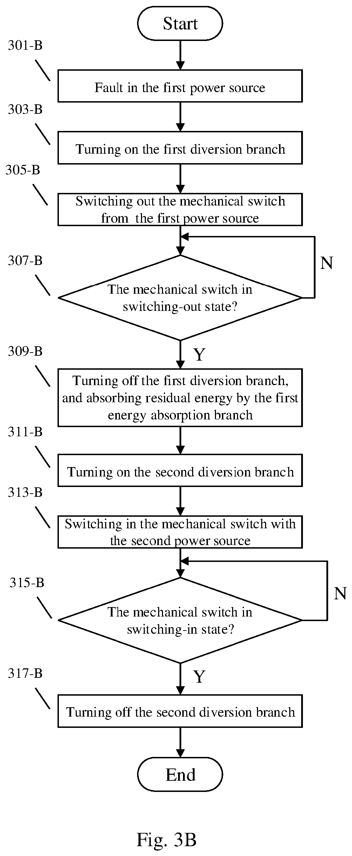

Next, the fast switching between power sources using a fast transfer switch will be described in detail with reference to Fig. 3B.

Fig. 3B shows a flowchart of a method 300-B for fast switching between power sources using a hybrid fast transfer switch according to an embodiment of the present invention.

At block 301-B, a fault occurs in the first power source S1, and it is considered to switch to the second power source S2 so that the second power source S2 supplies power to the load L. Specifically, whether to perform the switching may be determined based on the situation of loop current. If a short circuit occurs, the mechanical switch is switched in with the first power source S1 and waits for a superior protection device to cut off the short-circuit current. If an overload occurs, the overload current is evaluated, and the operation of switching from the first power source S1 to the second power source S2 is performed under the condition that the safe operation for diversion branches can be ensured.

At block 303-B, the first diversion branch SS_SW1 is turned on to prevent arcing when the mechanical switch S is switched out from the first power source S1.

At block 305-B, the mechanical switch S is switched out from the first power source S1.

At block 307-B, the switching-out state of the mechanical switch S is detected. If it is confirmed that the mechanical switch S is in switching-out state, the method 300-B proceeds to block 309-B. The switching-out state of the mechanical switch S may be detected by detecting the change in current of the first stationary contact SW1, or by detecting the change in position of the microswitch, the Hall effect sensor, etc., and so on.

At block 309-B, the first diversion branch SS_SW1 is turned off, and at the same time, the residual energy in the circuit is absorbed by the first energy absorption branch MOV1 to ensure that when the first diversion branch SS_SW1 is turned off, no voltage spike will be caused.

At block 311-B, the second diversion branch SS_SW2 is turned onto fast conduct the second power source S2 and the load L.

At block 313-B, the mechanical switch S is switched in with the second power source S2.

At block 315-B, the switching-in state of the mechanical switch S is detected. If it is confirmed that the mechanical switch S is in switching-in state, the method proceeds to block 317-B. The method for detecting the switching-in state of the mechanical switch S is similar to the method for detecting the switching-out state of the mechanical switch S, which will not be repeated.

At block 317-B, the second diversion branch SS_SW2 is turned off, and the operation of fast switching from the first power source S1 to the second power source S2 performed by the hybrid fast transfer switch 101 is completed.

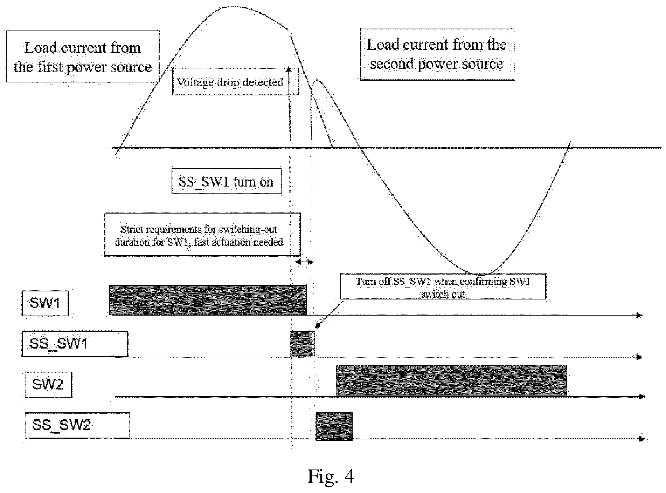

Fig. 4 shows a timing diagram of a method for fast switching between power sources using a hybrid fast transfer switch according to an embodiment of the present invention.

Referring to Fig. 4, at the beginning, the mechanical switch S is maintained to be switched in with the first power source, and the load is powered by the first power source S1. When a voltage drop is detected from the first power source S1 and it is determined that a fault occurs in the first power source S1, it is decided to switch from the first power source S1 to the second power source S2. Then, the first diversion branch SS_SW1 is turned on, and the mechanical switch S is switched out from the first power source S1, wherein the disconnection of the first stationary contact SW1 from the movable contact SW3 is required to be completed in an extremely short duration. After the switching-out state of the mechanical switch is detected, the first diversion branch SS_SW1 is turned off. Then, the second diversion branch SS_SW2 is turned on, and the mechanical switch S is switched in with the second power source S2. After the switching-in state of the mechanical switch is detected, the second diversion branch SS_SW2 is turned off to complete the fast switching from the first power source S1 to the second power source S2.

Specifically, the duration required for switching from the first power source S1 to the second power source S2 is generally less than 5ms or 10ms. The process comprises: turning on the first diversion branch SS_SW1, switching out the mechanical switch S from the first power source S1, turning off the first diversion branch SS_SW1 and turning on the second diversion branch SS_SW2. Wherein, in order to meet the duration requirement for the fast switching, the switching out of the mechanical switch from the first power source is required to be completed in an extremely short duration. As described above with reference to Fig. 1, in the example Z IF according to the invention J Z of using the Thomson effect execution device to implement the fast switching-out, when the switching duration is required to be less than 10ms, the action duration for the Thomson effect execution device should be less than 1ms, and the sum of the action duration, and the disconnected duration for the first stationary contact SW1 and the movable contact SW3 of the mechanical switch S should be less than 9ms. When the switching duration is required to be less than 5ms, the action duration for the Thomson effect execution device should be less than 500µs, and the sum of the action duration, and the disconnected duration for the first stationary contact SW1 and the movable contact SW3 of the mechanical switch S should be less than 4.5ms.

It should be noted that for the sake of clarity and conciseness, only the parts related to embodiments of the present invention are shown in Fig. 1 and Figs. 2A-2C, but it should be understood by those skilled in the art that the devices or apparatus shown in Fig. 1 and Figs. 2A-2C may include other necessary units.

Those skilled in the art can realize that the units and algorithm steps of each example described in connection with the embodiments disclosed herein can be realized by electronic hardware, computer software or a combination of both. In order to illustrate the interchangeability of hardware and software clearly, the components and steps of each example have been generally described in terms of functions in the above description. Whether these functions implemented in hardware or software depends on the specific application and design constraints of the technical scheme.

It can be clearly understood by those skilled in the art that for the convenience and conciseness of description, the specific working processes of the systems, devices, and units described above can refer to the corresponding processes in the aforementioned method embodiments and will not be repeated here.

In several embodiments provided by this application, it should be understood that the disclosed systems, devices, and methods can be realized in other ways. For example, the embodiment described above for device is only exemplary. For example, the division of the units is only a logical function division. In actual implementation, there may be other division methods, such as multiple units or components that can be combined or integrated into another system, or some features can be ignored or not implemented. On the other hand, the mutual coupling or direct coupling or communication connection shown or discussed can be indirect coupling or communication connection through some interfaces, devices, or units, which can be electrical, mechanical or in other forms.

The units described as separate components may or may not be physically separated, and the components displayed as units may or may not be physical units, which may be located in one place or distributed to multiple network units. Some or all of the units can be selected according to actual needs to achieve the purpose of this embodiment.

In addition, each functional unit in each embodiment of the present invention may be integrated into one processing unit, or each unit may exist physically separated, or two or more units may be integrated into one unit. The above integrated units can be realized in the form of hardware or software functional units.

The integrated unit can be stored in a computer-readable storage medium if it is realized in the form of a software functional unit and sold or used as an independent product. Based on such understanding, the technical solution of the present invention can be embodied in the form of a software product, which is stored in a storage medium and includes several instructions to make a computer device (which can be a personal computer, a server, a network device, etc.) execute all or part of the steps of the method described in various embodiments of the present invention. The aforementioned storage media includes: U disk, mobile hard disk, Read-Only Memory (ROM), Random Access Memory (RAM), magnetic disk or optical disk and other media that can store program codes.

## Claims

1. A hybrid fast transfer switch (101), comprising:
a mechanical switch (S) including a first stationary contact (SW1), a second stationary contact (SW2) and a movable contact (SW3), wherein the first stationary contact (SW1) is connected to a first power source (S1), the second stationary contact (SW2) is connected to a second power source (S2), and the movable contact (SW3) is connected to a load (L);
a first diversion branch (SS_SW1) connected between the first power source (S1) and the load (L);
a first energy absorption branch (MOV1) connected between the first power source (S1) and the load (L);
a second diversion branch (SS_SW2) connected between the second power source (S2) and the load (L); and
a second energy absorption branch (MOV2) connected between the second power source (S2) and the load (L),
**characterized in that** the switching out of the mechanical switch (S) utilizes Thomson effect actuation.

2. The hybrid fast transfer switch (101) according to claim 1, wherein each of the first diversion branch (SS_SW1) and the second diversion branch (SS_SW2) includes one or more of: insulated gate bipolar transistors (IGBTs) or metal-oxide semiconductor field effect transistors (MOSFETs) connected in reverse series, a full-bridge submodule or a semi-controlled device.

3. The hybrid fast transfer switch (101) according to claim 1, wherein each of the first energy absorption branch (MOV1) and the second energy absorption branch (MOV2) includes one or more of: a metal oxide voltage limiter (MOV), a transient voltage suppressor (TVS) and an RC buffer.

4. The hybrid fast transfer switch (101) according to claim 1, wherein the switching in of the mechanical switch (S) utilizes one or more of an energy storage spring and/or an electromagnet driver.

5. The hybrid fast transfer switch (101) according to claim 1, wherein the mechanical switch (S) is a single-pole double-throw mechanical switch.

6. The hybrid fast transfer switch (101) according to claim 1, wherein the mechanical switch (S) includes a first mechanical switch and a second mechanical switch that are independent of each other, the first mechanical switch includes the first stationary contact (SW1) and the movable contact, and the second mechanical switch includes the second stationary contact (SW2) and the movable contact.

7. A method for fast switching between power sources using a hybrid fast transfer switch (101), comprising:
detecting a fault in a first power source (S1); and
performing, by the hybrid fast transfer switch (101), switching from the first power source (S1) to a second power source (S2),
wherein, the hybrid fast transfer switch (101) comprises:
a mechanical switch (S) including a first stationary contact (SW1), a second stationary contact (SW2) and a movable contact (SW3), wherein the first stationary contact (SW1) is connected to the first power source (S1), the second stationary contact (SW2) is connected to the second power source (S2), and the movable contact (SW3) is connected to a load (L);
a first diversion branch (SS_SW1) connected between the first power source (S1) and the load (L);
a first energy absorption branch (MOV1) connected between the first power source (S1) and the load (L);
a second diversion branch (SS_SW2) connected between the second power source (S2) and the load (L); and
a second energy absorption branch (MOV2) connected between the second power source (S2) and the load (L),
**characterized in that** the switching out of the mechanical switch (S) utilizes Thomson effect actuation.

8. The method according to claim 7, wherein switching from the first power source (S1) to the second power source (S2) using the hybrid fast transfer switch (101) comprises:
turning on the first diversion branch (SS_SW1) (301-A);
switching out the mechanical switch (S) from the first power source (S1) (303-A);
turning off the first diversion branch (SS_SW1), and absorbing the residual energy by the first energy absorption branch (MOV1) (305-A);
turning on the second diversion branch (SS_SW2) (307-A);
switching in the mechanical switch with the second power source (S2) (309-A);
turning off the second diversion branch (SS_SW2) (311-A); and
switching to the second power source (S2) (313-A).

9. The method according to claim 8, further comprising confirming, before turning off the first diversion branch (SS_SW1), that the mechanical switch (S) is in switching-out state, wherein confirming that the mechanical switch (S) is in switching-out comprises:
detecting the change in current flowing through the first stationary contact (SW1) of the mechanical switch (S); or
detect the change in position of a microswitch or a Hall effector.

10. The method according to claim 8, further comprising confirming, before turning off the second diversion branch (SS_SW2), that the mechanical switch (S) is in switching-in state, wherein confirming that the mechanical switch (S) is in switching-in state comprises:
detecting the change in current flowing through the second stationary contact (SW2) of the mechanical switch (S); or
detect the change in position of a microswitch or a Hall effector.

11. The method according to claim 7, wherein the mechanical switch (S) is a single-pole double-throw mechanical switch.

12. The method according to claim 7, wherein the mechanical switch (S) includes a first mechanical switch and a second mechanical switch that are independent of each other, the first mechanical switch includes the first stationary contact (SW1) and the movable contact, and the second mechanical switch includes the second stationary contact (SW2) and the movable contact.

13. The method according to claim 7, further comprising determining whether to perform the switching from the first power source (S1) to the second power source (S2) based on situation of loop current to ensure safe operation of diversion branches.

14. The method according to claim 13, wherein:
if a short circuit occurs, not performing the switching and waiting for a superior protection device to cut off the short-circuit current; or
if an overload occurs, evaluating the overload current and determining whether to perform the switching based on a result of the evaluation.

## Patentansprüche

1. Hybrid-Schnellumschalter (101), umfassend:
einen mechanischen Schalter (S), der einen ersten stationären Kontakt (SW1), einen zweiten stationären Kontakt (SW2) und einen beweglichen Kontakt (SW3) umfasst, wobei der erste stationäre Kontakt (SW1) mit einer ersten Stromquelle (S1) verbunden ist, der zweite stationäre Kontakt (SW2) mit einer zweiten Stromquelle (S2) verbunden ist und der bewegliche Kontakt (SW3) mit einer Last (L) verbunden ist;
einen ersten Umleitungszweig (SS_SW1), der zwischen der ersten Stromquelle (S1) und der Last (L) verbunden ist;
einen ersten Energieabsorptionszweig (MOV1), der zwischen der ersten Stromquelle (S1) und der Last (L) verbunden ist;
einen zweiten Umleitungszweig (SS_SW2), der zwischen der zweiten Stromquelle (S2) und der Last (L) verbunden ist; und
einen zweiten Energieabsorptionszweig (MOV2), der zwischen der zweiten Stromquelle (S2) und der Last (L) verbunden ist,
**dadurch gekennzeichnet, dass** das Ausschalten des mechanischen Schalters (S) eine Thomson-Effekt-Betätigung nutzt.

2. Hybrid-Schnellumschalter (101) nach Anspruch 1, wobei jeder von dem ersten Umleitungszweig (SS_SW1) und dem zweiten Umleitungszweig (SS_SW2) eines oder mehrere von Folgendem umfasst: Bipolartransistoren mit isoliertem Gate (IGBTs) oder Metall-Oxid-Halbleiter-Feldeffekttransistoren (MOSFETs), die in umgekehrter Reihe verbunden sind, ein Vollbrücken-Submodul oder eine halbgesteuerte Vorrichtung.

3. Hybrid-Schnellumschalter (101) nach Anspruch 1, wobei jeder von dem ersten Energieabsorptionszweig (MOV1) und dem zweiten Energieabsorptionszweig (MOV2) eines oder mehrere von Folgendem umfasst: einen Metalloxid-Spannungsbegrenzer (MOV), einen transienten Spannungsunterdrücker (TVS) und einen RC-Puffer.

4. Hybrid-Schnellumschalter (101) nach Anspruch 1, wobei das Einschalten des mechanischen Schalters (S) eines oder mehrere von einer Energiespeicherfeder und/oder einem Elektromagnettreiber nutzt.

5. Hybrid-Schnellumschalter (101) nach Anspruch 1, wobei der mechanische Schalter (S) ein einpoliger mechanischer Wechselschalter ist.

6. Hybrid-Schnellumschalter (101) nach Anspruch 1, wobei der mechanische Schalter (S) einen ersten mechanischen Schalter und einen zweiten mechanischen Schalter umfasst, die voneinander unabhängig sind, der erste mechanische Schalter den ersten stationären Kontakt (SW1) und den beweglichen Kontakt umfasst und der zweite mechanische Schalter den zweiten stationären Kontakt (SW2) und den beweglichen Kontakt umfasst.

7. Verfahren zum schnellen Umschalten zwischen Stromquellen unter Verwendung eines Hybrid-Schnellumschalters (101), umfassend:
Erkennen eines Fehlers in einer ersten Stromquelle (S1); und
Durchführen, durch den Hybrid-Schnellumschalter (101), eines Umschaltens von der ersten Stromquelle (S1) zu einer zweiten Stromquelle (S2),
wobei der Hybrid-Schnellumschalter (101) umfasst:
einen mechanischen Schalter (S), der einen ersten stationären Kontakt (SW1), einen zweiten stationären Kontakt (SW2) und einen beweglichen Kontakt (SW3) umfasst, wobei der erste stationäre Kontakt (SW1) mit der ersten Stromquelle (S1) verbunden ist, der zweite stationäre Kontakt (SW2) mit der zweiten Stromquelle (S2) verbunden ist und der bewegliche Kontakt (SW3) mit einer Last (L) verbunden ist;
einen ersten Umleitungszweig (SS_SW1), der zwischen der ersten Stromquelle (S1) und der Last (L) verbunden ist;
einen ersten Energieabsorptionszweig (MOV1), der zwischen der ersten Stromquelle (S1) und der Last (L) verbunden ist;
einen zweiten Umleitungszweig (SS_SW2), der zwischen der zweiten Stromquelle (S2) und der Last (L) verbunden ist; und
einen zweiten Energieabsorptionszweig (MOV2), der zwischen der zweiten Stromquelle (S2) und der Last (L) verbunden ist,
**dadurch gekennzeichnet, dass** das Ausschalten des mechanischen Schalters (S) eine Thomson-Effekt-Betätigung nutzt.

8. Verfahren nach Anspruch 7, wobei das Umschalten von der ersten Stromquelle (S1) zu der zweiten Stromquelle (S2) unter Verwendung des Hybrid-Schnellumschalters (101) umfasst:
Einschalten des ersten Umleitungszweigs (SS_SW1) (301-A);
Ausschalten des mechanischen Schalters (S) von der ersten Stromquelle (S1) (303-A);
Ausschalten des ersten Umleitungszweigs (SS_SW1) und Absorbieren der Restenergie durch den ersten Energieabsorptionszweig (MOV1) (305-A);
Einschalten des zweiten Umleitungszweigs (SS_SW2) (307-A);
Einschalten des mechanischen Schalters mit der zweiten Stromquelle (S2) (309-A);
Ausschalten des zweiten Umleitungszweigs (SS_SW2) (311-A); und
Umschalten auf die zweite Stromquelle (S2) (313-A).

9. Verfahren nach Anspruch 8, ferner umfassend das Bestätigen, vor dem Ausschalten des ersten Umleitungszweigs (SS_SW1), dass sich der mechanische Schalter (S) im Ausschaltzustand befindet, wobei das Bestätigen, dass sich der mechanische Schalter (S) im Ausschaltzustand befindet, umfasst:
Erkennen der Änderung des Stroms, der durch den ersten stationären Kontakt (SW1) des mechanischen Schalters (S) fließt; oder
Erkennen der Änderung der Position eines Mikroschalters oder eines Hall-Effektors.

10. Verfahren nach Anspruch 8, ferner umfassend das Bestätigen, vor dem Ausschalten des zweiten Umleitungszweigs (SS_SW2), dass sich der mechanische Schalter (S) im Einschaltzustand befindet, wobei das Bestätigen, dass sich der mechanische Schalter (S) im Einschaltzustand befindet, umfasst:
Erkennen der Änderung des Stroms, der durch den zweiten stationären Kontakt (SW2) des mechanischen Schalters (S) fließt; oder
Erkennen der Änderung der Position eines Mikroschalters oder eines Hall-Effektors.

11. Verfahren nach Anspruch 7, wobei der mechanische Schalter (S) ein einpoliger mechanischer Wechselschalter ist.

12. Verfahren nach Anspruch 7, wobei der mechanische Schalter (S) einen ersten mechanischen Schalter und einen zweiten mechanischen Schalter umfasst, die voneinander unabhängig sind, der erste mechanische Schalter den ersten stationären Kontakt (SW1) und den beweglichen Kontakt umfasst und der zweite mechanische Schalter den zweiten stationären Kontakt (SW2) und den beweglichen Kontakt umfasst.

13. Verfahren nach Anspruch 7, ferner umfassend das Bestimmen, ob das Umschalten von der ersten Stromquelle (S1) zu der zweiten Stromquelle (S2) durchgeführt werden soll, basierend auf einem Zustand des Schleifenstroms, um einen sicheren Betrieb von Umleitungszweigen sicherzustellen.

14. Verfahren nach Anspruch 13, wobei:
wenn ein Kurzschluss auftritt, das Umschalten nicht durchgeführt wird und darauf gewartet wird, dass eine übergeordnete Schutzvorrichtung den Kurzschlussstrom abschaltet; oder
wenn eine Überlast auftritt, der Überlaststrom ausgewertet wird und basierend auf einem Ergebnis der Auswertung bestimmt wird, ob das Umschalten durchgeführt werden soll.

## Revendications

1. Commutateur de transfert rapide hybride (101), comprenant :
un commutateur mécanique (S) comprenant un premier contact fixe (SW1), un second contact fixe (SW2) et un contact mobile (SW3), dans lequel le premier contact fixe (SW1) est connecté à une première source d'alimentation (S1), le second contact fixe (SW2) est connecté à une seconde source d'alimentation (S2), et le contact mobile (SW3) est connecté à une charge (L) ;
une première branche de dérivation (SS_SW1) connectée entre la première source d'alimentation (S1) et la charge (L) ;
une première branche d'absorption d'énergie (MOV1) connectée entre la première source d'alimentation (S1) et la charge (L) ;
une seconde branche de dérivation (SS_SW2) connectée entre la seconde source d'alimentation (S2) et la charge (L) ; et
une seconde branche d'absorption d'énergie (MOV2) connectée entre la seconde source d'alimentation (S2) et la charge (L),
**caractérisé en ce que** l'ouverture du commutateur mécanique (S) utilise un actionnement par effet Thomson.

2. Commutateur de transfert rapide hybride (101) selon la revendication 1, dans lequel chacune de la première branche de dérivation (SS_SW1) et de la seconde branche de dérivation (SS_SW2) comprend un ou plusieurs parmi : des transistors bipolaires à grille isolée (IGBT) ou des transistors à effet de champ à semi-conducteur à oxyde métallique (MOSFET) connectés en série inverse, un sous-module en pont complet ou un dispositif semi-commandé.

3. Commutateur de transfert rapide hybride (101) selon la revendication 1, dans lequel chacune de la première branche d'absorption d'énergie (MOV1) et de la seconde branche d'absorption d'énergie (MOV2) comprend un ou plusieurs parmi : un limiteur de tension à oxyde métallique (MOV), un suppresseur de tension transitoire (TVS) et un tampon RC.

4. Commutateur de transfert rapide hybride (101) selon la revendication 1, dans lequel la fermeture du commutateur mécanique (S) utilise un ou plusieurs parmi un ressort de stockage d'énergie et/ou un pilote d'électroaimant.

5. Commutateur de transfert rapide hybride (101) selon la revendication 1, dans lequel le commutateur mécanique (S) est un commutateur mécanique unipolaire à deux directions.

6. Commutateur de transfert rapide hybride (101) selon la revendication 1, dans lequel le commutateur mécanique (S) comprend un premier commutateur mécanique et un second commutateur mécanique qui sont indépendants l'un de l'autre, le premier commutateur mécanique comprend le premier contact fixe (SW1) et le contact mobile, et le second commutateur mécanique comprend le second contact fixe (SW2) et le contact mobile.

7. Procédé de commutation rapide entre des sources d'alimentation en utilisant un commutateur de transfert rapide hybride (101), comprenant :
la détection d'un défaut dans une première source d'alimentation (S1) ; et
la réalisation, par le commutateur de transfert rapide hybride (101), d'une commutation de la première source d'alimentation (S1) à une seconde source d'alimentation (S2),
dans lequel le commutateur de transfert rapide hybride (101) comprend :
un commutateur mécanique (S) comprenant un premier contact fixe (SW1), un second contact fixe (SW2) et un contact mobile (SW3), dans lequel le premier contact fixe (SW1) est connecté à la première source d'alimentation (S1), le second contact fixe (SW2) est connecté à la seconde source d'alimentation (S2), et le contact mobile (SW3) est connecté à une charge (L) ;
une première branche de dérivation (SS_SW1) connectée entre la première source d'alimentation (S1) et la charge (L) ;
une première branche d'absorption d'énergie (MOV1) connectée entre la première source d'alimentation (S1) et la charge (L) ;
une seconde branche de dérivation (SS_SW2) connectée entre la seconde source d'alimentation (S2) et la charge (L) ; et
une seconde branche d'absorption d'énergie (MOV2) connectée entre la seconde source d'alimentation (S2) et la charge (L),
**caractérisé en ce que** l'ouverture du commutateur mécanique (S) utilise un actionnement par effet Thomson.

8. Procédé selon la revendication 7, dans lequel la commutation de la première source d'alimentation (S1) à la seconde source d'alimentation (S2) en utilisant le commutateur de transfert rapide hybride (101) comprend :
l'activation de la première branche de dérivation (SS_SW1) (301-A) ;
l'ouverture du commutateur mécanique (S) depuis la première source d'alimentation (S1) (303-A) ;
la désactivation de la première branche de dérivation (SS_SW1), et l'absorption de l'énergie résiduelle par la première branche d'absorption d'énergie (MOV1) (305-A) ;
l'activation de la seconde branche de dérivation (SS_SW2) (307-A) ;
la fermeture du commutateur mécanique avec la seconde source d'alimentation (S2) (309-A) ;
la désactivation de la seconde branche de dérivation (SS_SW2) (311-A) ; et
la commutation vers la seconde source d'alimentation (S2) (313-A).

9. Procédé selon la revendication 8, comprenant en outre la confirmation, avant la désactivation de la première branche de dérivation (SS_SW1), que le commutateur mécanique (S) est dans un état de désactivation, dans lequel la confirmation que le commutateur mécanique (S) est dans un état de désactivation comprend :
la détection du changement de courant circulant à travers le premier contact fixe (SW1) du commutateur mécanique (S) ; ou
la détection du changement de position d'un micro commutateur ou d'un effecteur à effet Hall.

10. Procédé selon la revendication 8, comprenant en outre la confirmation, avant la désactivation de la seconde branche de dérivation (SS_SW2), que le commutateur mécanique (S) est dans un état d'activation, dans lequel la confirmation que le commutateur mécanique (S) est dans un état d'activation comprend :
la détection du changement de courant circulant à travers le second contact fixe (SW2) du commutateur mécanique (S) ; ou
la détection du changement de position d'un micro commutateur ou d'un effecteur à effet Hall.

11. Procédé selon la revendication 7, dans lequel le commutateur mécanique (S) est un commutateur mécanique unipolaire à deux directions.

12. Procédé selon la revendication 7, dans lequel le commutateur mécanique (S) comprend un premier commutateur mécanique et un second commutateur mécanique qui sont indépendants l'un de l'autre, le premier commutateur mécanique comprend le premier contact fixe (SW1) et le contact mobile, et le second commutateur mécanique comprend le second contact fixe (SW2) et le contact mobile.

13. Procédé selon la revendication 7, comprenant en outre la détermination s'il faut réaliser la commutation de la première source d'alimentation (S1) à la seconde source d'alimentation (S2) sur la base d'un état du courant de boucle pour assurer un fonctionnement sûr de branches de dérivation.

14. Procédé selon la revendication 13, dans lequel :
si un court-circuit se produit, la non-réalisation de la commutation et l'attente qu'un dispositif de protection supérieur coupe le courant de court-circuit ; ou si une surcharge se produit, l'évaluation du courant de surcharge et la détermination s'il faut réaliser la commutation sur la base d'un résultat de l'évaluation.
